# FASCICULE DE BREVET EUROPEEN

(11) **EP 3 877 257 B1**
(45) Date de publication et mention de la délivrance du brevet: **23.11.2022**
(21) Numéro de dépôt: 20772344.6
(22) Date de dépôt: 23.09.2020
(51) Int. Cl.: B64C 21/08, B64D 15/04, B64C 3/14

(54) **SYSTÈME D'ASPIRATION DE COUCHE LIMITE ET DE PROTECTION CONTRE LE GIVRE D'UNE SURFACE PORTANTE D'AÉRONEF**
SYSTEM ZUM ABSAUGEN DER GRENZSCHICHT UND ZUM SCHUTZ VOR VEREISUNG EINER FLUGZEUGTRAGFLÄCHE
SYSTEM FOR SUCTION OF THE BOUNDARY LAYER AND PROTECTION AGAINST ICING OF AN AIRCRAFT BEARING SURFACE

(30) Priorité: 24.09.2019 BE 201905628
(43) Date de publication de la demande: 15.09.2021
(73) Titulaire: Sonaca S.A., 6041 Gosselies (BE)
(72) Inventeur: ELMOUDEN, Said, 7000 MONS (BE); DELLISSE, Nicolas, 4210 BURDINNE (BE)
(74) Mandataire: Brevalex
(86) Numéro de dépôt international: PCT/EP2020/076562
(87) Numéro de publication internationale: WO 2021/058560

(56) Documents cités:
- EP-A1- 3 431 395
- EP-A1- 3 533 712
- EP-A2- 0 436 243
- DE-T2- 69 309 666

## Description

### DOMAINE TECHNIQUE

L'invention concerne un système de protection contre le givre et d'aspiration de couche limite d'une surface portante d'aéronef telle qu'une aile ou un empennage.

### ÉTAT DE LA TECHNIQUE ANTÉRIEURE

Il est connu du document EP0436243A2 d'équiper une aile d'aéronef d'un système de protection contre le givre comprenant des canaux dans lesquels circule de l'air chaud pour éviter la formation de givre. Il est également connu de perforer la paroi de cette aile pour aspirer la couche limite, c'est-à-dire l'air longeant la surface externe de cette paroi, au moyen de canaux d'aspiration équipant également cette aile.

La protection contre le givre est activée en phase de décollage, d'atterrissage ou d'attente d'atterrissage, alors que l'aspiration de couche limite, qui permet de réduire la trainée de l'aile, est activée en phase de vol de croisière.

En pratique, la paroi d'une aile, encore appelée peau, délimitant à sa portion amont un bord d'attaque incurvé prolongé vers l'aval par un intrados et par un extrados, et il est nécessaire d'empêcher la formation de givre et d'aspirer la couche limite au niveau du bord d'attaque et au niveau d'une partie amont de l'extrados.

Il apparait que les systèmes connus ayant ces deux fonctionnalités ont des structures relativement complexes pénalisantes de point de vue de leur intégration dans la portion amont de l'aile.

Le but de l'invention est d'apporter un système offrant les fonctions de protection contre le givre et d'aspiration de couche limite, qui soit simplifié pour faciliter d'autant son intégration dans l'aile.

### EXPOSÉ DE L'INVENTION

A cet effet, l'invention a pour objet un système de protection contre le givre et d'aspiration de couche limite d'une surface portante d'aéronef, comportant une paroi pourvue de micro-perforations et délimitant un bord d'attaque prolongé par une paroi d'intrados et par une paroi d'extrados, avec une paroi interne reliant la paroi d'extrados à la paroi d'intrados et délimitant avec le bord d'attaque une baie avant, ce système comportant un tube perforé longeant le bord d'attaque en s'étendant dans la baie avant, un clapet anti-retour raccordé au tube pour autoriser l'admission d'air dans le tube à travers le clapet et interdire le refoulement d'air provenant du tube à travers le clapet, des moyens pour aspirer l'air de ce tube afin d'aspirer la couche limite successivement par les micro-perforations de la paroi et les perforations du tube, et des moyens pour souffler de l'air chaud dans ce tube perforé en phase de protection contre le givre, cet air chaud étant évacué successivement par les perforations du tube et les micro-perforations de la paroi.

L'invention apporte ainsi une solution simplifiée puisqu'il n'est nécessaire de prévoir un circuit de récupération de l'air de protection contre le givre, cet air chaud étant directement évacué vers l'extérieur. Grâce à l'invention, l'air de protection contre le givre est surpressurisé essentiellement dans le tube perforé, de sorte qu'il n'est pas nécessaire de surdimensionner les éléments délimitant l'enceinte de la baie avant pour qu'ils supportent une pression élevée.

L'invention a également pour objet un système ainsi défini, comportant une baie arrière longeant une face interne de l'extrados, et reliée à la baie avant par des ouvertures traversant la paroi interne.

L'invention a également pour objet un système ainsi défini, comportant un clapet anti-retour raccordé d'une part au tube et d'autre part à la baie arrière par un conduit traversant la paroi interne, pour autoriser l'admission d'air dans le tube provenant directement des canaux.

L'invention a également pour objet un système ainsi défini, dans lequel la baie arrière comporte des canaux reliés chacun à au moins une ouverture traversant la paroi interne.

L'invention a également pour objet un système ainsi défini, comprenant un clapet équipant un point bas de la baie avant, pour évacuer au cours d'une opération de maintenance, de l'eau condensée dans la baie avant en ouvrant ce clapet.

L'invention a également pour objet un système ainsi défini, comprenant un clapet équipant la baie avant pour éviter une surpressurisation de la baie avant en phase de protection contre le givre, en cas de bouchage de micro-perforations de la paroi de la surface portante.

L'invention a également pour objet un système ainsi défini, comprenant un même clapet d'évacuation d'eau condensée et de limitation de surpressurisation.

### BRÈVE DESCRIPTION DES DESSINS

La figure 1 est une vue en vue en coupe d'une aile équipée du système selon l'invention en phase de protection contre le givre ;
La figure 2 est une vue de dessus représentant schématiquement une portion d'aile équipée du système selon l'invention en phase de protection contre le givre ;
La figure 3 est une vue en vue en coupe d'une aile équipée du système selon l'invention en phase d'aspiration de couche limite ;
La figure 4 est une vue de dessus représentant schématiquement une portion d'aile équipée du système selon l'invention en phase d'aspiration de couche limite ;
La figure 5 est une vue schématique d'un clapet anti-retour pouvant équiper le système selon l'invention ;
La figure 6 est une vue en vue en coupe d'une aile équipée d'une variante du système selon l'invention en phase d'aspiration de couche limite ;
La figure 7 est une représentation en perspective d'un clapet de drainage et de dépressurisation du système selon l'invention.

### EXPOSÉ DÉTAILLÉ DE MODES DE RÉALISATION PARTICULIERS

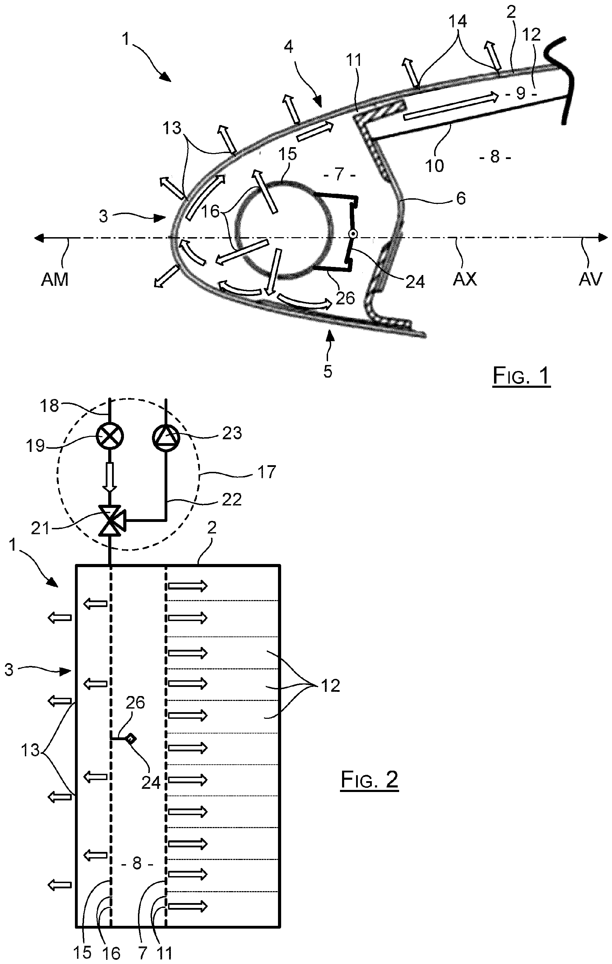

Sur la figure 1, une portion avant d'aile 1 représentée en coupe comporte une paroi externe 2 incurvée pour délimiter un bord d'attaque 3 dans sa région de plus forte courbure, prolongé par un extrados 4 et par un intrados 5 qui sont des parois de faible courbure s'étendant selon des directions générales coïncidant sensiblement avec la direction d'avancement de l'aile en service. Cette direction d'avancement correspond à un axe longitudinal repéré par AX, selon une orientation amont repérée par AM, de sorte que l'intrados et l'extrados s'étendent ver l'aval AV du bord d'attaque.

Complémentairement, l'extrados 4 et l'intrados 5 sont reliés l'un à l'autre par une paroi interne 6 qui s'étend perpendiculairement à la direction d'avancement en aval du bord d'attaque 3. Cette paroi sépare l'aile 1 en une baie avant 7 s'étendant du bord d'attaque jusqu'à la paroi 6 et une partie arrière 8 s'étendant au delà de la paroi 6, vers l'aval AV c'est-à-dire en direction opposée au bord d'attaque 3. Cette partie arrière 8 comporte une baie arrière 9 délimitée par une paroi 10 qui longe la paroi d'extrados 4 en étant espacée de celle-ci en étant en communication avec la baie avant 7.

Cette paroi 6 s'étend depuis la paroi d'intrados 5 jusqu'à la paroi d'extrados 4. Elle est liée à la paroi d'intrados 5 par une jonction fermée, c'est-à-dire ne pouvant être traversée par de l'air. Mais cette paroi 6 est liée à la paroi d'extrados 4 par une jonction comportant une série d'ouvertures 11, permettant à de l'air de franchir cette paroi 6 en longeant la face interne de la paroi d'extrados 4, la baie avant 7 et la baie arrière 9 étant ainsi en communication l'une avec l'autre. Les ouvertures 11 sont espacées les unes des autres le long de l'aile 1, c'est-à-dire le long d'une direction transversale perpendiculaire à l'axe AX.

La baie arrière peut comporter une série de canaux longitudinaux 12 s'étendant selon l'axe AX espacés les uns des autres selon la direction transversale. Chaque canal 12 s'étend alors dans la baie arrière 9 depuis la paroi 6 où il est directement raccordé à une ouverture 11 correspondante, jusqu'à une extrémité aval de la baie arrière qui est fermée. Ces canaux 12 sont représentés par des lignes pointillées sur les dessins pour figurer le fait qu'ils sont optionnels.

La paroi 2 comporte des micro-perforations 13 traversant son bord d'attaque 3 et mettant en communication l'environnement externe avec la baie avant 7, et des micro-perforations 14 traversant la paroi d'extrados 4 pour mettre en communication l'environnement externe avec l'intérieur des canaux 12.

Comme visible sur la figure 1, la baie avant 7 contient un tube perforé 15, encore appelé tube piccolo, qui s'étend sur toute une portion de l'aile 1 selon la direction transversale, et qui permet de souffler de l'air chaud en phase de dégivrage. Ce tube 15, encore appelé tube piccolo, comporte des perforations 16 pour diffuser dans la baie avant 7 de l'air chaud fourni par un système d'alimentation 17 en phase de protection contre le givre.

Ce système d'alimentation 17 comporte un conduit d'alimentation 18 prélevant de l'air d'une partie chaude d'un moteur pour l'injecter dans le tube 15 auquel il est directement connecté. Ce conduit d'alimentation 18 est équipé d'une vanne 19 et d'une vanne 21 à trois voies montées en série entre le moteur et le tube 15, la vanne 21 étant en outre reliée à un conduit d'échappement 22.

L'air chaud prélevé sur le moteur est avantageusement régulé en température dans un échangeur thermique non représenté, avant d'être injecté dans le tube perforé 15. Complémentairement, une vanne de régulation peut être prévue pour réguler la pression dans le tube 15, et par là-même le débit d'air dans ce tube 15.

Comme illustré sur les figures 1 et 2, en phase de protection contre le givre, la vanne 21 est commandée pour mettre en communication la vanne 19 avec le tube 15 et pour isoler le conduit d'échappement 22 du circuit, et la vanne 19 est activée. Dans cette configuration, l'air chaud arrive pressurisé dans le tube 15 pour alimenter la baie avant 7 à travers les perforations 16 de façon à la pressuriser tout en étant projeté contre la face interne du bord d'attaque 3. Une partie de cet air chaud sort par les micro-perforations 13 débouchant directement dans la baie avant 7, et une autre partie de cet air chaud chemine vers l'aval AV dans la baie arrière 9 via les ouvertures 11 pour sortir par les micro-perforations 14 formées dans l'extrados 4 et débouchant directement dans cette baie arrière 9.

Ainsi, en mode de protection contre le givre, l'air chaud entre directement en contact avec la face externe de la paroi 2 de l'aile, c'est-à-dire avec un film d'eau ruisselant sur la face externe de la paroi, et avec la couche limite qui désigne l'air extérieur longeant le bord d'attaque et l'extrados. L'air chaud circulant dans le tube 15 est intégralement ou au moins essentiellement extrait à travers la paroi externe micro-perforée 2, de sorte que la chaleur est entièrement diffusée sur le bord d'attaque et l'extrados de l'aile.

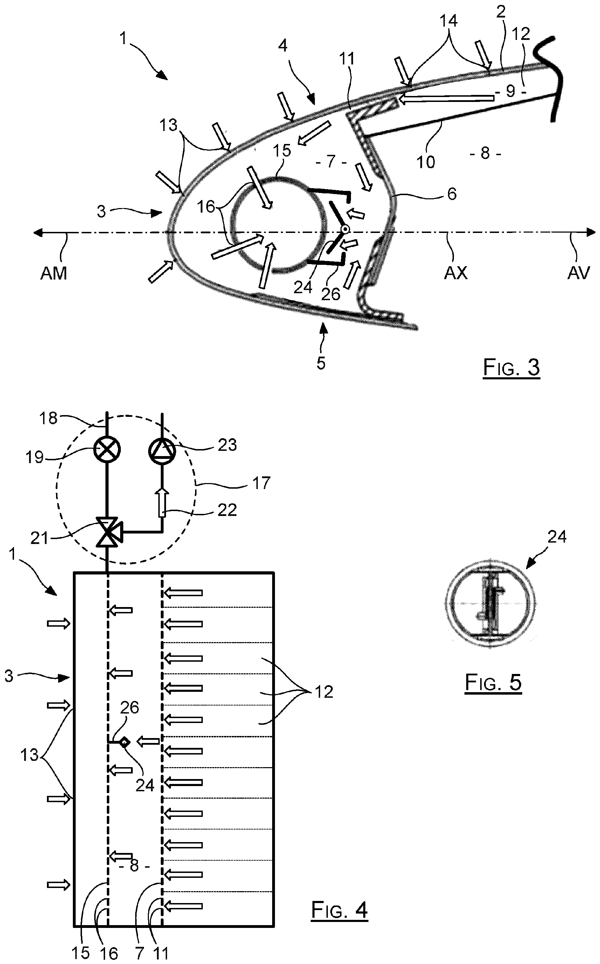

Comme représenté schématiquement sur la figure 3, le système des figures 1 et 2 est également apte à fonctionner pour aspirer la couche limite longeant la paroi 2 au niveau du bord d'attaque et au niveau de l'extrados de manière à réduire la trainée de l'aile, notamment en phase de vol de croisière.

Dans ce cas, la vanne trois voies 21 est pilotée pour mettre en communication le conduit d'échappement 22 avec le tube 15 et pour isoler le conduit d'alimentation 18 du reste du circuit, et une pompe d'aspiration 23 équipant le conduit d'échappement 22 est activée.

Dans cette configuration d'aspiration de la couche limite, le tube 15 est en dépression pour aspirer par ses perforations 16 l'air présent dans la baie avant 7. Ainsi, comme représenté schématiquement sur la figure 3, l'air de la couche limite longeant la face externe du bord d'attaque 3 est aspiré par les micro-perforations 13 pour entrer la baie avant 7 et en être ensuite extrait par le tube 15. De manière analogue, la dépression de la baie avant provoque une aspiration de l'air de la couche limite longeant l'extrados 4 via les micro-perforations 14 débouchant dans la baie arrière 9 qui sont eux-mêmes en dépression du fait qu'ils communiquent avec la baie avant 7 par les ouvertures 11.

Pour accroître le débit d'aspiration requis en phase d'aspiration de couche limite, le tube 15 est équipé d'un ou plusieurs clapets d'aspiration tels que le clapet repéré par 24.

Sur l'exemple des figures, le clapet 24 est monté à l'extrémité aval d'un embout tubulaire 26 s'étendant perpendiculairement au tube 15 auquel est raccordée son extrémité amont. Ce clapet 24 qui est représenté seul sur la figure 5 est un clapet anti-retour configuré pour autoriser l'admission d'air dans l'embout 26, depuis la baie 7 vers le tube 15, et pour interdire la sortie d'air provenant du tube 15 vers la baie 7. Dans ces conditions, ce clapet permet de disposer d'une section qui est plus importante pour l'aspiration d'air hors du tube 15 que pour l'alimentation en air chaud au moyen de ce même tube 15.

Comme visible sur la figure 4, l'embout 26 est orienté vers l'aval pour porter le clapet anti-retour 24 à son extrémité libre, ce qui permet de dépressuriser efficacement l'ensemble de la baie avant 7.

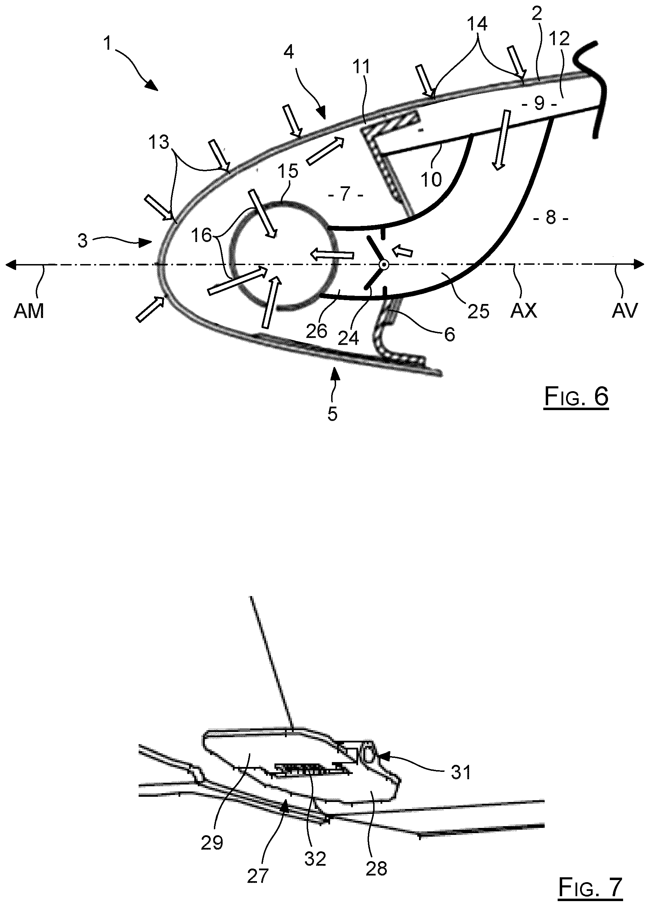

Selon une variante représentée sur la figure 6, l'extrémité aval de l'embout 26 est raccordée directement à la baie arrière par un conduit 25 traversant la paroi interne 6, de façon à aspirer directement l'air le long de la paroi d'extrados 4 pour augmenter l'efficacité de l'aspiration dans cette région-là de l'aile.

Cette variante peut être prévue alternativement ou complémentairement à la solution décrite en référence à la figure 3. Autrement dit, le tube 15 peut être raccordé d'une part à un ou plusieurs clapets anti-retour équipant un ou plusieurs embouts débouchant dans la baie avant 7, et d'autre part à un ou plusieurs clapets anti-retour équipant une ou plusieurs canalisations additionnelles raccordées à la baie arrière 9.

En fonctionnement, l'humidité présente dans la couche limite aspirée se condense dans la baie avant 7 pour se rassembler à un point bas de cette baie avant 7, situé sensiblement au niveau de la paroi d'intrados. Avantageusement, l'intrados est équipé au niveau du point bas de la baie avant 7 d'un clapet 27 s'ouvrant vers l'extérieur, tel que représenté schématiquement sur la figure 7. Ce clapet 27 permet à un opérateur de maintenance de vidanger l'humidité accumulée dans la baie avant 7, simplement en l'ouvrant vers l'extérieur.

Comme on le comprend, le clapet 27 ne s'ouvrant que vers l'extérieur autorise uniquement la sortie de liquide ou de fluide hors de la baie avant 7. Il peut ainsi également être exploité pour limiter une surpressurisation de la baie avant 7 si les micro-perforations 13, 14 seraient bouchées en phase de protection contre le givre. Autrement dit, le clapet 27 permettant de vidanger manuellement l'humidité accumulée est avantageusement aussi un clapet anti-retour taré pour limiter la surpression dans la baie avant 7.

Comme représenté schématiquement sur la figure 7, un tel clapet 27 peut être formé par un volet fixe 28 rigidement solidarisé à la paroi d'intrados, auquel est articulé un volet mobile 29 par une charnière 31 comprenant un axe 32 portant un ressort hélicoïdal 33 s'opposant à l'ouverture du volet mobile 29. Dans ces conditions, l'ouverture du volet mobile 29 nécessite de lui appliquer un effort supérieur à celui de la tare du ressort 33. Cet effort d'ouverture peut être exercé soit par un opérateur tirant le volet mobile 29 pour vidanger l'humidité accumulée, soit par une augmentation de pression dans la baie avant 7 en phase de protection contre le givre si trop de micro-perforations de la paroi 2 sont bouchées.

## Revendications

1. Système de protection contre le givre et d'aspiration de couche limite d'une surface portante (1) d'aéronef, comportant une paroi (2) pourvue de micro-perforations (13, 14) et délimitant un bord d'attaque (3) prolongé par une paroi d'intrados (5) et par une paroi d'extrados (4), avec une paroi interne (6) reliant la paroi d'extrados (4) à la paroi d'intrados (5) et délimitant avec le bord d'attaque une baie avant (7), ce système comportant un tube perforé (15) longeant le bord d'attaque (3) en s'étendant dans la baie avant (7), un clapet anti-retour (24) raccordé au tube (15) pour autoriser l'admission d'air dans le tube (15) à travers le clapet (24) et interdire le refoulement d'air provenant du tube (15) à travers le clapet (24), des moyens (23) pour aspirer l'air de ce tube (15) afin d'aspirer la couche limite successivement par les micro-perforations (13, 14) de la paroi (2) et les perforations (16) du tube (15), et des moyens (19) pour souffler de l'air chaud dans ce tube perforé (15) en phase de protection contre le givre, cet air chaud étant évacué successivement par les perforations (16) du tube (15) et les micro-perforations (13, 14) de la paroi (2).

2. Système selon la revendication 1, comportant une baie arrière (9) longeant une face interne de l'extrados (4), et reliée à la baie avant (7) par des ouvertures (11) traversant la paroi interne (6).

3. Système selon la revendication 2, comportant un clapet anti-retour (24) raccordé d'une part au tube (15) et d'autre part à la baie arrière (9) par un conduit traversant la paroi interne (6), pour autoriser l'admission d'air dans le tube (15) provenant directement des canaux (12).

4. Système selon la revendication 2, dans lequel la baie arrière (9) comporte des canaux (12) reliés chacun à au moins une ouverture (11) traversant la paroi interne (6).

5. Système selon la revendication 1, comprenant un clapet (27) équipant un point bas de la baie avant (7), pour évacuer au cours d'une opération de maintenance, de l'eau condensée dans la baie avant (7) en ouvrant ce clapet (27).

6. Système selon la revendication 1, comprenant un clapet (27) équipant la baie avant (7) pour éviter une surpressurisation de la baie avant (7) en phase de protection contre le givre, en cas de bouchage de micro-perforations (13, 14) de la paroi de la surface portante (1).

7. Système selon selon les revendications 5 et 6, comprenant un même clapet (27) d'évacuation d'eau condensée et de limitation de surpressurisation.

## Patentansprüche

1. System zum Schützen vor Vereisung und zum Absaugen einer Grenzschicht einer Flugzeugtragfläche (1), eine Wand (2) beinhaltend, die mit Mikroperforierungen (13, 14) versehen ist, und eine Vorderkante (3) begrenzt, die durch eine Saugseitenwand (5) und durch eine Druckseitenwand (4) verlängert ist, mit einer Innenwand (6), die die Druckseitenwand (4) mit der Saugseitenwand (5) verbindet, und mit der Vorderkante ein Vordergestell (7) begrenzt, wobei dieses System ein perforiertes Rohr (15) beinhaltet, das entlang der Vorderkante (3) verläuft, und sich dabei in dem Vordergestell (7) erstreckt, ein Rückschlagventil (24), das an das Rohr (15) angeschlossen ist, um den Lufteinlass in das Rohr (15) durch das Ventil (24) hindurch zu erlauben, und die Luftabgabe aus dem Rohr (15) durch das Ventil (24) hindurch zu untersagen, Mittel (23) zum Ansaugen der Luft aus diesem Rohr (15), um die Grenzschicht nach und nach durch die Mikroperforierungen (13, 14) der Wand (2) und die Perforierungen (16) des Rohres (15) abzusaugen, und Mittel (19) zum Einblasen von warmer Luft in dieses perforierte Rohr (15) in einer Schutzphase gegen das Vereisen, wobei diese warme Luft nach und nach durch die Perforierungen (16) des Rohres (15) und die Mikroperforierungen (13, 14) der Wand (2) ausgebracht wird.

2. System nach Anspruch 1, das ein Hintergestell (9) beinhaltet, das entlang einer Innenseite der Druckseite (4) verläuft, und durch Öffnungen (11), die die Innenwand (6) durchqueren, mit dem Vordergestell (7) verbunden ist.

3. System nach Anspruch 2, das ein Rückschlagventil (24) beinhaltet, das durch eine Leitung, die die Innenwand (6) durchquert, einerseits an das Rohr (15), und andererseits an das Hintergestell (9) angeschlossen ist, um den Lufteinlass in das Rohr (15) direkt aus den Kanälen (12) kommend zu erlauben.

4. System nach Anspruch 2, wobei das Hintergestell (9) Kanäle (12) beinhaltet, die jeweils mit mindestens einer Öffnung (11), die die Innenwand (5) durchquert, verbunden sind.

5. System nach Anspruch 1, das ein Ventil (27) umfasst, mit dem ein Tiefpunkt des Vordergestells (7) ausgerüstet ist, um im Laufe von Wartungsarbeiten Kondenswasser im Vordergestell (7) durch Öffnen dieses Ventils (27) auszubringen.

6. System nach Anspruch 1, das ein Ventil (27) umfasst, mit dem das Vordergestell (7) ausgerüstet ist, um eine Überdruckbeaufschlagung des Vordergestells (7) in einer Schutzphase gegen das Vereisen im Falle einer Verstopfung von Mikroperforierungen (13, 14) der Wand der Tragfläche (1) zu vermeiden.

7. System nach den Ansprüchen 5 und 6, das ein selbes Ventil (27) zum Ausbringen von Kondenswasser und Begrenzen einer Überdruckbeaufschlagung umfasst.

## Claims

1. Boundary layer suction and ice protection system for an aircraft aerofoil (1), including a wall (2) provided with micro-perforations (13, 14) and delimiting a leading edge (3) extended by a lower surface wall (5) and by an upper surface wall (4), with an inner wall (6) linking the upper surface wall (4) to the lower surface wall (5) and delimiting with the leading edge a front bay (7), this system including a perforated tube (15) running along the leading edge (3) by extending into the front bay (7), a check valve (24) coupled to the tube (15) to allow the intake of air into the tube (15) through the flapper valve (24) and to prohibit the backflow of air coming from the tube (15) through the flapper valve (24), means (23) for sucking the air from this tube (15) in order to suck the boundary layer successively via the micro-perforations (13, 14) of the wall (2) and the perforations (16) of the tube (15), and means (19) for blowing hot air into this perforated tube (15) during the ice protection phase, this hot air being evacuated successively via the perforations (16) of the tube (15) and the micro-perforations (13, 14) of the wall (2).

2. System according to claim 1, including a rear bay (9) running along an inner face of the upper surface (4), and linked to the front bay (7) by openings (11) traversing the inner wall (6).

3. System according to claim 2, including a check valve (24) coupled on the one hand to the tube (15) and on the other hand to the rear bay (9) by a duct traversing the inner wall (6), to allow the intake of air into the tube (15) coming directly from the channels (12).

4. System according to claim 2, wherein the rear bay (9) includes channels (12) each linked to at least one opening (11) traversing the inner wall (6).

5. System according to claim 1, comprising a flapper valve (27) equipping a low point of the front bay (7), in order to evacuate during a maintenance operation, the condensed water in the front bay (7) by opening this flapper valve (27).

6. System according to claim 1, comprising a flapper valve (27) equipping the front bay (7) in order to avoid an overpressurisation of the front bay (7) during the ice protection phase, in case of clogging of micro-perforations (13, 14) of the wall of the aircraft (1).

7. System according to claims 5 and 6, comprising the same flapper valve (27) for evacuating condensed water and for limiting overpressurisation.
